**Europäisches Patentamt**

**European Patent Office**

**Office européen des brevets**

(19)

(11) Numéro de publication: **0 069 675**
**A2**

(12) ## DEMANDE DE BREVET EUROPEEN

(21) Numéro de dépôt: **82401281.9**

(22) Date de dépôt: **07.07.82**

(51) Int. Cl.³: **E 02 B 15/04**

(30) Priorité: **08.07.81 FR 8113419**

(43) Date de publication de la demande:
**12.01.83 Bulletin 83/2**

(84) Etats contractants désignés:
**AT BE CH DE GB IT LI LU NL SE**

(71) Demandeur: **SOCIETE D'EXPLOITATION DES BREVETS GRANOFIBRE S.E.B.R.E.G. Société Anonyme dite:**
**"Le Verenay" Ampuis**
**F-69420 Condrieu(FR)**

(72) Inventeur: **Fournet, Jean**
**80, rue de la Plaine Saint-Romain en Gal**
**F-69560 - Ste Colombe(FR)**

(74) Mandataire: **Caunet, Jean et al,**
**Cabinet BEAU DE LOMENIE 55, rue d'Amsterdam**
**F-75008 Paris(FR)**

(54) **Nappe absorbante de liquides variés et notamment d'hydrocarbures.**

(57) La nappe absorbante fait application de granulés fibreux cohérents à base de fibres individualisées, ces granulés tels que ceux connus dans le commerce sous le nom de granofibres étant sensiblement sphériques, légers, souples et élastiques, solides vis-à-vis de toute sollicitation à la désagrégation, à pouvoir d'absorption élevé, bon marché...
Selon l'invention, les granulés (1) sont répartis en couche dans une enveloppe souple poreuse (2) dont les deux feuilles superficielles (3, 4) sont réunies entre elles par des lignes de solidarisation telles que des lignes de piquage (7, 8) s'opposant à la migration et à l'accumulation desdits granulés dans certaines zones au détriment du reste.

Fig.2

EP 0 069 675 A2

Nappe absorbante de liquides variés et notamment d'hydrocarbures.-

La présente invention concerne une nappe
absorbante de liquides variés et notamment d'hydrocarbures, de graisses, d'huiles ou autres.

La nappe fait application de granulés
fibreux cohérents à base de fibres individualisées, ces
granulés étant de préférence de ceux du type connu dans
le commerce sous le nom de "granofibres", lesquels
peuvent être fabriqués par la mise en oeuvre de l'un
quelconque des procédés décrits dans les brevets français
n° 1.422.835, n° 1.540.382, n° 1.583.783 et n° 2.193.350.
De tels granulés ont des propriétés extrêmement intéressantes : ils sont sensiblement sphériques, légers,
souples et élastiques, solides vis-à-vis de toute
sollicitation à la désagrégation; surtout ils ont un
pouvoir d'absorption très élevé vis-à-vis des liquides
et étant donné qu'ils sont relativement bon marché, il
n'y a aucune raison d'hésiter à les utiliser à la place
des produits absorbants classiques qui, ainsi que cela
est bien connu, ne donnent pas satisfaction à l'utilisateur qui très souvent renonce même à les employer.

Ces granulés sont actuellement utilisés
dans de nombreux secteurs économiques et quelques
exemples sont donnés ci-après lorsqu'il s'agit d'exploiter leurs propriétés absorbantes qui sont celles recherchées pour la mise en oeuvre de la présente invention.

Ainsi, les sols de certains locaux, tels
que des ateliers, des magasins de stockage et de conditionnement, des magasins de vente... peuvent être salis
par des huiles de coupe, des encres d'imprimerie, des
huiles ou peintures, des liquides gras de fabrication ou
d'alimentation etc ... ; pour les nettoyer, il suffit
d'étaler sur les liquides ainsi répandus des granulés
fibreux n'ayant subi aucun traitement particulier,si ce n'est celui de les rendre ignifuges en vue de leur stockage avant utilisation ; l'expérience montre que de tels granulés absorbent parfaitement les liquides considérés et n'en laissent subsister aucune trace sur le sol. Mais la difficulté réside dans le ramassage des granulés gonflés par les liquides salissants, problème qui à ce jour n'est toujours pas résolu de façon satisfaisante du point de vue de l'efficacité, de la facilité, de la rapidité et de la propreté. Si le nettoyage est mal fait, il subsiste alors des granulés imprégnés, lesquels adhèrent aux semelles des chaussures, aux roues des véhicules de manutention, au dessous des charges posées sur le sol... et constituent par conséquent une gêne et un élément de salissure qui ne sont cependant et fort heureusement pas aussi graves que si les liquides étaient laissés au sol, car dans ce cas, la circulation du personnel et des engins de manutention est extrêmement dangereuse. D'autre part, ces granulés imprégnés laissés sur place peuvent aussi se déliter et adhérer au sol par suite de l'écrasement en formant ainsi des agglomérats très difficiles à éliminer.

Le même problème se pose lorsque des liquides gras ou dangereux sont répandus accidentellement sur le sol dans des zones non protégées, telles que des rues, des routes ou autoroutes, des parkings. Dans ce cas, on utilise encore des granulés fibreux mais ceux-ci ont été préalablement soumis à un traitement hydrophobe afin qu'ils n'absorbent pas l'eau de pluie, l'eau de ruissellement ou l'eau stagnante, mais qu'ils absorbent par contre les liquides accidentellement répandus pour les éliminer et éventuellement les récupérer. La difficulté réside encore dans le ramassage de ces granulés gonflés de liquide, difficulté qui se trouve en outre aggravée par l'action des éléments naturels tels que le vent et la pluie.

Le problème de la pollution des eaux libres se pose en des termes semblables ; en effet, lorsque des huiles, des hydro-carbures légers ou lourds, ou d'autres produits liquides aptes à surnager sont déversés sur l'eau, ils se répandent à sa surface et peuvent après un temps plus ou moins long venir ensuite polluer les berges des fleuves ou rivières, les côtes marines ou lacustres, les installations flottantes ou émergeantes etc... . Jusqu'à ce jour , aucune technique ne permet d'éliminer en totalité de la surface de l'eau, les hydrocarbures ou autres produits qui peuvent parfois y être répandus ; de plus, lorsque la nappe de liquide polluant s'étale, se divise et s'achemine vers les berges ou la côte, aucune technique ne permet de s'opposer à cette progression il devient alors inévitable que ces berges ou côte se recouvrent dudit liquide polluant et il est extrêmement difficile et coûteux de les nettoyer, le terrain ainsi nettoyé n'étant de toute façon jamais redevenu parfaitement propre.

Or, des essais ont été entrepris en projetant avec des lances sur la nappe polluante les granulés fibreux hydrophobes précités et l'expérience s'est révélée extrêmement satisfaisante car toute la nappe s'est trouvée absorbée par lesdits granulés. Mais comme dans les cas précédents, le problème est de récupérer ces granulés gonflés de produit polluant sur l'eau du fleuve ou sur la mer d'autant que les vents et les courants ont tendance à les disperser.

La présente invention a pour but d'utiliser pour l'absorption de liquides variés et notamment d'hydrocarbures de tels granulés fibreux et concomitamment de mettre en oeuvre dans le produit utilisé lui-même des moyens permettant de récupérer les granulés chargés de liquides à éliminer en vue de nettoyer totalement la surface du sol ou de l'eau, lesdits moyens devant subsidiairement permettre de récupérer les liquides provisoirement piégés par absorption par lesdits granulés.

Conformément à l'invention, les granulés sont répartis en couche dans une enveloppe souple poreuse dont les deux feuilles superficielles sont réunies entre elles par des lignes de solidarisation telles que des lignes de piquage s'opposant à la migration et à l'accumulation desdits granulés dans certaines zones au détriment du reste.

De préférence, l'une au moins des feuilles de l'enveloppe est constituée par une grille ou un filet dont les fils de trame et de chaîne liés entre eux à leurs points de croisement, définissent des mailles dont le passage est plus petit que la grosseur minimale des granulés.

Suivant une forme de réalisation grâce à laquelle la nappe doit pouvoir absorber des deux côtés, les deux feuilles de l'enveloppe sont constituées par une grille ou filet.

Suivant une autre forme de réalisation grâce à laquelle la nappe doit pouvoir absorber par une face et protéger de façon étanche par sa face sous-jacente un support, la feuille sous-jacente de l'enveloppe est imperméable et constituée notamment par une feuille plastique,tandis que la feuille apparente de ladite enveloppe est constituée comme précédemment par une grille ou un filet.

Quelle que soit la forme de réalisation choisie, les lignes de solidarisation, notamment de piquage, s'étendent parallèlement les unes aux autres dans la direction de la longueur qui est celle des fils de chaîne lorsque l'enveloppe comporte au moins une grille ou un filet.

Mais il semble plus avantageux que d'autres lignes de solidarisation, notamment de piquage, coopèrent avec les précédentes et s'étendent parallèlement les unes aux autres dans la direction de la largeur qui est celle des fils de trame lorsque l'enveloppe comporte au moins une grille ou un filet.

Divers autres caractéristiques et avantages de l'invention ressortent d'ailleurs de la description détaillée qui suit.

Des formes de réalisation de l'objet de l'invention sont représentées,à titre d'exemples non limitatifs sur le dessin annexé :

Sur ce dessin :

- les figures 1 et 2 sont des perspectives illustrant deux modes d'exécution d'une première forme de réalisation de la nappe absorbante selon l'invention,

- la figure 3 est une coupe transversale montrant une deuxième forme de réalisation de la nappe appliquée à la protection de la voie d'accès d'une pompe à essence,

- la figure 4 est une vue en plan de dessus prise relativement à la figure 3.

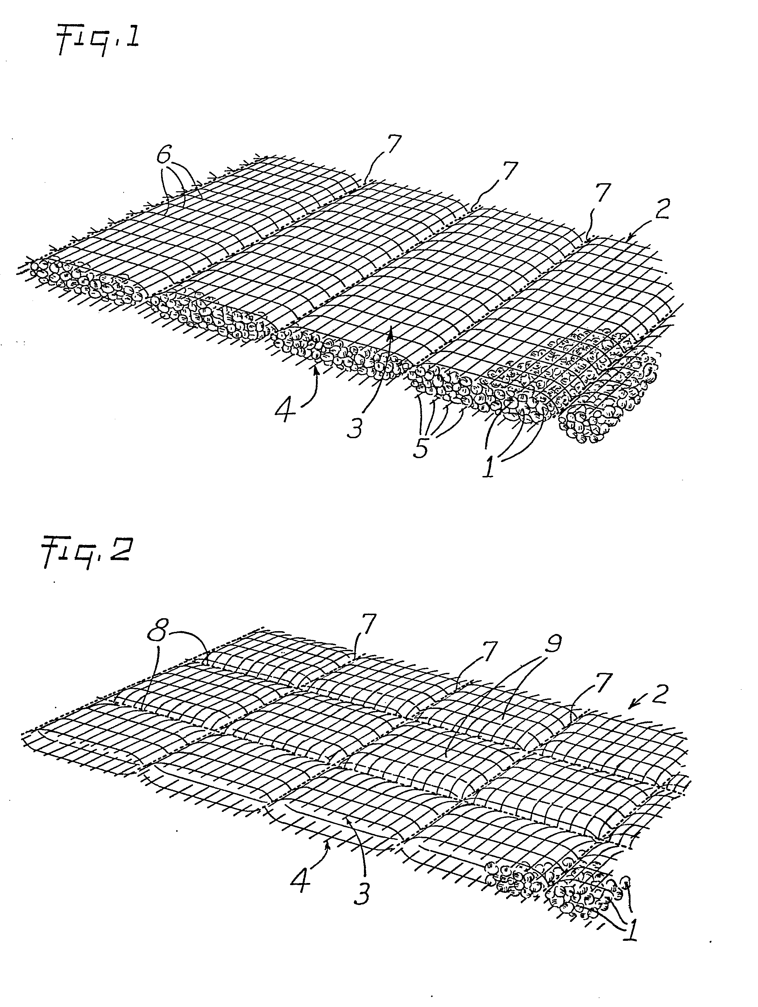

Ainsi que cela ressort des figures 1 et 2, la nappe comporte des granulés fibreux 1 (du type défini dans ce qui précède) répartis en couche dans une enveloppe 2 ; cette enveloppe doit être souple pour pouvoir épouser parfaitement les irrégularités de relief d'un terrain ou les vagues d'un plan d'eau ; elle doit aussi être poreuse afin que le liquide absorbé par les granulés puissent parvenir jusqu'à ceux-ci à travers ladite enveloppe sans être freiné pendant son cheminement par des pertes de charge excessives.

Dès lors, une telle enveloppe peut être en toile ou autre matériau tissé ou non tissé,du moment que ce matériau est très aéré et qu'il possède une résistance suffisante au déchirement.

En réalité, l'enveloppe 2 est constituée, à titre préférentiel,par deux feuilles superposées 3 et 4 en filet ou mieux en grille, entre lesquelles se trouve prise en sandwich la couche de granulés 1.

Une grille est constituée par un réseau de fils de chaîne 5 et un réseau de fils de trame 6 perpendiculaire l'un à l'autre, les fils étant liés entre eux à leurs points de croisement par collage ou soudage ; dans le cas d'un filet, les fils des différents réseaux sont liés entre eux à leurs points de croisement par des noeuds. De toute façon, qu'il s'agisse d'une grille ou d'un filet, les fils de chaîne 5 et de trame 6 définissent entre eux des mailles dont le passage est plus petit que la grosseur minimale des granulés. Ainsi, le liquide à absorber, traverse sans aucune difficulté les mailles considérées pour parvenir aux granulés et malgré cela ceux-ci se trouvent parfaitement piégés par les deux feuilles 3 et 4.

Mais il est important que les granulés restent à leur place entre lesdites feuilles, c'est-à-dire n'aient pas tendance par gravité ou sous l'effet dynamique des vagues à migrer dans certaines zones en accroissant ainsi l'épaisseur à cet endroit de la nappe et à dégarnir les autres zones dont l'épaisseur devient insignifiante.

A cet effet, et selon un premier mode d'exécution illustré par la figure 1, les deux feuilles 3 et 4 de la nappe 2 sont réunies entre elles par des lignes de solidarisation 7 qui sont avantageusement réalisées par piquage; ces lignes de piquage 7 sont parallèles entre elles et aux fils de chaîne 5; elles sont suffisamment rapprochées les unes des autres pour que les granulés 1 ne s'amassent pas entre elles en boudins.

Selon un deuxième mode d'exécution représenté sur la figure 2, les deux feuilles 3 et 4 sont réunies localement, non seulement par le réseau de lignes de piquage 7 parallèles aux fils de chaîne 5, mais également par un réseau de lignes de piquage 8 parra- llèles aux lignes de trame 6. Ces lignes de piquage 7 et 8 délimitent des coussinets carrés ou rectangulaires 9 dont l'étendue est définie en fonction de la quantité unitaire des granulés 1 à piéger sous une épaisseur déterminée.

Une telle nappe peut être utilisée pour éponger des salissures liquides diverses au moment où celles-ci se trouvent répandues ou projetées sur le support à nettoyer, étant entendu que la nappe considérée doit être enlevée après nettoyage pour laisser ledit support à nu. Par exemple, cette nappe peut être découpée en éléments d'étendue limitée pour constituer des serpillières ; elle peut aussi être livrée en rouleaux dévidables sur le terrain et découpables en fonction de la longueur de la zone à traiter; toutes sortes de dimensionnements et de conditionnements de cette nappe peuvent être envisagées et il n'est nullement question de les détailler, car ceux-ci sont adaptés aux conditions du traitement à effectuer.

Cependant, il est important de souligner que le liquide absorbé par la nappe peut très facilement être restitué en comprimant les granulés, par calendrage de la nappe par exemple. Par ailleurs, si le liquide absorbé est combustible, la nappe imprégnée est elle-même combustible, étant donné que les granulés sont généralement fabriqués à partir de fibres de bois ; dès lors, cette nappe imprégnée peut être stockée en vue de son utilisation pour alimenter une chaudière, la nappe pouvant à cet effet être conservée en son état ou déchiquetée.

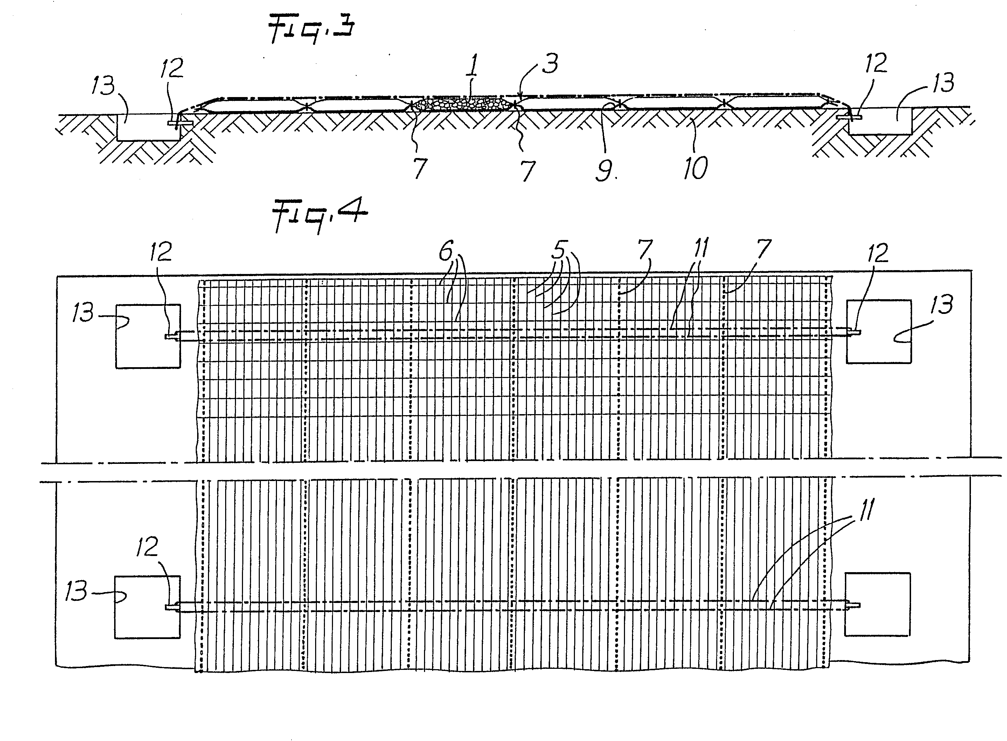

S'il s'agit de laisser la nappe en place sur le support afin que, d'une part, cette nappe reçoive et absorbe le liquide indésirable au fur et à mesure qu'il y parvient et, d'autre part, ladite nappe protège ledit support en le soustrayant à toute atteinte, la nappe doit être fabriquée suivant la deuxième forme de réalisation ressortant des figures 3 et 4.

Dans cette deuxième forme de réalisation, l'enveloppe 2 est constituée par une grille ou un filet apparent 3 du type déjà décrit et par une feuille imperméable sous-jacente 9 ; cette dernière est de préférence constituée par un film plastique d'épaisseur appropriée. Les granulés 1 sont alors emprisonnés entre la grille ou filet 3 et la feuille plastique 9 ; ils forment alors des bandes étroites séparées par les lignes longitudinales 7 parallèles aux filsde chaîne.

Ce mode d'exécution convient parfaitement pour protéger la voie d'accès d'une pompe à essence; elle est alors déroulée sur la voie entre le passage des roues. La feuille plastique 9 est au contact du sol 10 alors que la grille ou filet 3 est apparent et peut recevoir les égouttures d'huile, de graisse ou autre qui tombent des véhicules se succédant sur ladite voie ; les égouttures traversent la grille ou filet et sont absorbées par les granulés ; si elles sont en excès et qu'elles parviennent alors à la feuille plastique 9, celle -ci s'oppose à ce que lesdites égouttures tachent le sol 10. Pour maintenir en place la nappe décrite ci-dessus, des bandes élastiques 11 sont disposées en travers et accrochées à leurs extrémités sur des saillies 12 encastrées dans la voie et débouchant en proéminence dans des petits évidements 13 de celles-ci ; lorsque les bandes élastiques sont tendues, elles pressent la nappe sur la voie d'accès.

Dans un deuxième mode d'exécution, la nappe est identique à celle décrite en se référant aux figures 3 et 4, mais elle comporte, en plus des lignes longitudinales de piquage 7, des lignes de piquage transversales 8 disposées et réparties comme cela ressort du mode d'exécution de la figure 2. Ce deuxième mode d'exécution de la nappe absorbante avec feuille imperméable est particulièrement avantageux lorsque la nappe considérée doit être déroulée sur de grandes longueurs.

C'est le cas lorsqu'il s'agit de protéger une plage, une côte rocheuse, une berge ou autre ; en effet, les nappes sont déroulées à marée basse côte à côte, leurs extrémités plongeantes étant immergées et lestées dans l'eau, tandis que leurs extrémités constamment immergées se trouvent fixées au sol ; lorsque les vagues déferlent sur les nappes et se retirent, elles déposent sur la couche de granulés à travers les mailles de la grille ou filet les hydrocarbures ou autres liquides polluants. Les nappes restent en place tant que l'eau est polluée et lorsque celle-ci ne l'est plus, lesdites nappes sont enroulées et évacuées ; elles sont traitées pour récupérer les hydro-carbures,soit sur place lors de l'enroulement,soit au lieu de stockage.

Pour faire comprendre l'invention et son intérêt tant sur le plan économique que sur le plan pratique d'utilisation, deux exemples sont donnés ci-après.

Dans le premier exemple qui se rapporte à la première forme de réalisation illustrée par la figure 2, la nappe comporte des granofibres dont le diamètre est compris entre 1 et 3 mm, et qui sont à base de fibres de cellulose ; ces granofibres sont spécialement traitées pour absorber des hydrocarbures répandus sur l'eau, du type fuel par exemple ; leur poids au $m^2$ est de 1.600 g pour une épaisseur de 10 mm d'hydrocarbures légers répandus sur l'eau, c'est-à-dire 10 litres d'hydrocarbures au $m^2$.

Ces granulés sont pris en sandwich entre deux grilles constituées par des fils en polyester, par exemple de 160 décitex ; la contexture des grilles est de 8 x 2, c'est-à-dire de 8 fils au cm en chaîne et de 2 fils au cm en trame pour un poids au $m^2$ de 55 g.

Ces deux grilles d'une laize de 2m10 par exemple sont assemblées entre elles par des coutures longitudinales espacées de 3 cm les unes des autres par exemple.

La nappe absorbante continue ainsi réalisée peut être bobinée par longueur de 25 mètres ou davantage.

Ces bobines déroulées sur l'eau absorbent parfaitement un hydrocarbure qui y aurait été répandu préalablement.

Dans le deuxième exemple qui se rapporte à la réalisation illustrée par la figure 3, on retrouve les mêmes granulés et une grille apparente identique ; par contre, la grille sous-jacente est remplacée par un film plastique étanche qui peut être par exemple un film de polyéthylène de 150 microns d'épaisseur. Ce film plastique et la grille apparente sont réunis entre eux par des coutures longitudinales espacées les unes des autres de 3 cm ; le poids au $m^2$ d'une telle nappe ayant une épaisseur de 10 mm est de 1.000 g environ ; cette nappe dont les granulés fibreux sont hydrophobes convient parfaitement comme tapis absorbant pour pistes d'accès à une pompe à essence.

L'invention n'est pas limitée aux formes de réalisation représentées et décrites en détail, car diverses modifications peuvent y être apportées sans sortir de son cadre.

REVENDICATIONS
--------------------------

1.- Nappe absorbante de liquides variés et notamment d'hydrocarbures, faisant application de granulés fibreux cohérents à base de fibres individualisées, ces granulés tels que ceux connus dans le commerce sous le nom de granofibres étant sensiblement sphériques, légers, souples et élastiques, solides vis-à-vis de toute sollicitation à la désagrégation, à pouvoir d'absorption élevé, bon marché... caractérisée en ce que les granulés(1)sont répartis en couche dans une enveloppe souple poreuse (2) dont les deux feuilles superficielles (3,4)sont réunies entre elles par des lignes de solidarisation telles que des lignes de piquage (7,8) s'opposant à la migration et à l'accumulation desdits granulés dans certaines zones au détriment du reste.

2.- Nappe selon la revendication 1, caractérisée en ce que l'une au moins des feuilles de l'enveloppe est constituée par une grille ou un filet (7,8) dont les fils de trame (6) et de chaîne (5), liés entre eux à leurs points de croisement, définissent des mailles dont le passage est plus petit que la grosseur minimale des granulés.

3.- Nappe selon la revendication 1 ou 2, caractérisée en ce que la feuille sous-jacente de l'enveloppe (destinée à être posée sur le sol d'un lieu susceptible d'être sali par des liquides gras ou autres, ou sur une côte marine, lacustre ou fluviale susceptible d'être polluée par des liquides pétroliers ou autres, ou sur tout autre support à protéger) est imperméable et constituée notamment par une feuille plastique (9).

4.- Nappe selon la revendication 1, appliquée à l'absorption de liquides gras, d'hydrocarbures ou autres répandus sur l'eau ou sur un sol soumis aux intempéries, caractérisée en ce que les granulés fibreux sont soumis à un traitement hydrophobe.

5.- Nappe selon l'une quelconque des revendications 1 à 3, caractérisée en ce que les lignes de solidarisation (7), notamment de piquage, s'étendent parallèlement les unes aux autres dans la direction de la longueur qui est celle des fils de chaîne (5) lorsque l'enveloppe comporte au moins une grille ou un filet.

6.- Nappe selon la revendication 5, caractérisée en ce que d'autres lignes de solidarisation, notamment de piquage (8), s'étendent parallèlement les unes aux autres dans la direction de la largeur qui est celle des fils de trame (6) lorsque l'enveloppe comporte au moins une grille ou un filet.

7.- Nappe selon les revendications 3 et 4, 5 ou 6, caractérisée en ce que la nappe est découpée en tapis et éventuellement bordée, ce tapis étant destiné à être posé, par sa feuille imperméable, sur la zone à protéger et fixé en place par des bandes élastiques transversales (11) accrochées sur des saillies enterrées (12).

Fig. 1

Fig. 2

Fig. 3

Fig. 4

0069675